# EUROPEAN PATENT SPECIFICATION

(11) **EP 3 677 823 B1**
(45) Date of publication and mention of the grant of the patent: **11.01.2023**
(21) Application number: 18913127.9
(22) Date of filing: 27.07.2018
(51) Int. Cl.: F16L 33/207

(54) **TUBE CONNECTION DEVICE**
ROHRVERBINDUNGSVORRICHTUNG
DISPOSITIF DE RACCORDEMENT DE TUBE

(30) Priority: 27.03.2018 CN 201810260206
(43) Date of publication of application: 08.07.2020
(73) Proprietor: Rifeng Enterprise (Foshan) Co., Ltd., Sanshui Foshan, Guangdong 528100 (CN); Rifeng Enterprise Group Co., Ltd., Foshan, Guangdong 528000 (CN); Rifeng Technology Co., Ltd., Foshan, Guangdong 528000 (CN)
(72) Inventor: LIN, Xiyong, Foshan, Guangdong 528100 (CN); DIAO, Zhenbin, Foshan, Guangdong 528100 (CN); LIU, Hao, Foshan, Guangdong 528100 (CN); LI, Ximin, Foshan, Guangdong 528100 (CN); CAO, Huijian, Foshan, Guangdong 528100 (CN); ZHANG, Hejin, Foshan, Guangdong 528100 (CN); CHENG, Jiajia, Foshan, Guangdong 528100 (CN); CHEN, Wenfeng, Foshan, Guangdong 528100 (CN); LI, Wenting, Foshan, Guangdong 528100 (CN)
(74) Representative: Petraz, Gilberto Luigi
(86) International application number: PCT/CN2018/097612
(87) International publication number: WO 2019/184167

(56) References cited:
- EP-A1- 1 653 142
- CN-A- 108 278 427
- CN-Y- 2 783 094
- CN-Y- 2 783 094
- CN-Y- 2 814 090
- CN-Y- 200 943 796
- DE-A1-102006 034 101
- DE-U1-202005 008 109
- US-A- 4 407 532
- US-A1- 2008 067 809
- US-B2- 7 806 442

## Description

### TECHNICAL FIELD

The present disclosure relates to the field of a pipe fitting connection technology, and particularly to a pipe fitting connection device.

### BACKGROUND

In order to ensure sealing performance between pipe fitting connection devices during the mounting of the pipe fittings, it is often necessary to use calipers to crimp the pipes. Due to the variety of the calipers, the traditional pipe fitting connection device cannot universally match all types of calipers, and the height of the teeth of different types of calipers is inconsistent, which results in that the number of indentations and the amount of compression at the indentations are different during the crimping of a pipe, so that the sealing performance between the pipe fitting connection device and the pipe cannot be effectively guaranteed.

DE 102006034101 A1 discloses a pipe fitting connection device including a pipe fitting body and a positioning sleeve. The pipe fitting body includes a core body and a connecting body. An end of the positioning sleeve matches an end of the connecting body. A mounting cavity is formed between the positioning sleeve and the core body. An outer wall of the positioning sleeve is provided with at least two spaced positioning ribs, and two adjacent positioning ribs match the positioning sleeve to form a clamping groove that matches a caliper tooth.

EP 1653142 A1 discloses a pressure coupling including an inner supporting tube and an outer pressure tube. The inner supporting tube includes a core body and a connecting body. An end of the positioning sleeve matches an end of the connecting body. Radial projections formed about the periphery of the pressure tube are aligned to the seal rings fitted around the supporting tube. The seal rings are deformed radially when the end of plastic pipe is fitted between the tubes.

### SUMMARY

In view of this, it is necessary to provide a pipe fitting connection device that can be used with a variety of calipers to ensure the sealing performance between the pipe fitting connection device and the pipe.

The technical solution is given by a pipe fitting connection device according to claim 1.

A pipe fitting connection device includes: a pipe fitting body including a core body and a connecting body connected to each other, the connecting body provided with a first matching portion; a positioning sleeve sleeving the core body, one end of the positioning sleeve provided with a second matching portion matching the first matching portion, the positioning sleeve spaced from the core body to form a mounting cavity for mounting a pipe, an outer wall of the positioning sleeve provided with at least two spaced positioning ribs, and two adjacent positioning ribs matching the positioning sleeve to form a clamping groove that matches a caliper tooth. The outer wall of the core body is provided with a mounting groove for mounting a sealing ring, the mounting groove includes a first side wall away from the connecting body, and the first side wall is provided with a packing groove. The mounting groove further includes a second side wall adjacent to the connecting body, the second side wall is provided with an anti-slip wall, a radial height of the anti-slip wall is greater than a radial height of the sealing ring.

When the above pipe fitting connection device is mounted and used, the positioning sleeve sleeves the core body along a length direction of the pipe fitting body until the second matching portion matches the first matching portion, thereby implementing the mounting and fixing of the positioning sleeve relative to the pipe fitting body, there is a gap between the positioning sleeve and core body, and the gap forms the mounting cavity for mounting a pipe. A pipe is inserted into the mounting cavity until the pipe abuts against a bottom wall of the mounting cavity, and a caliper is utilized to clamp the positioning sleeve to make the positioning sleeve and the pipe compressed and deformed to implement the sealing. In the case where a height of the caliper tooth is lower, such as an H-type caliper and a VP-type caliper, etc., the caliper tooth is placed into the clamping groove, the positioning ribs abut against an inner wall of the caliper, when the caliper bites, a bite force of the caliper tooth causes a bottom wall of the clamping groove to be compressed, meanwhile, a bite force of the inner wall of the caliper also causes the positioning ribs to be compressed, thereby making the pipe deformed and compressed in many places and ensuring the reliability of the sealing between the pipe fitting connection device and the pipe. In the case where a height of the caliper tooth is higher, such as a TH-type caliper, an F-type caliper, a U-type caliper, etc., the caliper tooth is placed into the clamping groove, there is a gap between the positioning rib and an inner wall of the caliper, when the caliper bites, a bite force of the caliper tooth causes a bottom wall of the clamping groove to be compressed, meanwhile, the gap between the positioning rib and the inner wall of the caliper is eliminated due to the bite of the caliper. When the caliper further bites, the bite force of the inner wall of the caliper also makes the positioning ribs compressed, and also makes the pipe deformed and compressed in many places, thereby ensuring the reliability of the sealing. Furthermore, an amount of compression of the bottom wall of the clamping groove is further increased after further bite of the caliper, thereby enhancing the sealing performance.

The technical solution is further described below.

In an embodiment, an inner wall of the clamping groove is provided with a positioning portion for positioning the caliper tooth.

In an embodiment, the pipe fitting connection device further includes a retaining ring sleeving the connecting body, the retaining ring is configured to fix the positioning sleeve relative to the core body, and the positioning sleeve, the retaining ring and the core body are matched to form the mounting cavity.

In an embodiment, the retaining ring includes a retaining ring body provided with a through hole, an inner wall of the through hole is provided with a third matching portion facing the connecting body, and the third matching portion matches the first matching portion.

In an embodiment, the retaining ring body is provided with a flange, the flange is opposite to and spaced from the third matching portion, the flange extends in a direction opposite to a direction in which the pipe is inserted, the flange is provided with a first protruding portion facing the connecting body, the first protruding portion, the flange and the retaining ring body are matched to form a fourth matching portion snap-fitted with the second matching portion.

In an embodiment, an inner wall of the mounting cavity is provided with a locking structure, the locking structure is disposed on an outer wall of the core body and/or an inner wall of the positioning sleeve, and the locking structure is tightly snap-fitted with the pipe when the pipe is compressed.

In an embodiment, the connecting body is further provided with a first guiding portion, and the first guiding portion is disposed adjacent to the first matching portion.

In an embodiment, the positioning sleeve is further provided with a second guiding portion, and the second guiding portion is disposed adjacent to the second matching portion.

### BRIEF DESCRIPTION OF THE DRAWINGS

FIG. 1 is a schematic structure diagram illustrating a pipe fitting connection device according to an embodiment;
FIG. 2 is a schematic structure diagram illustrating a pipe fitting body of the pipe fitting connection device in FIG. 1;
FIG. 3 is a partial enlarged view of part A of the pipe fitting connection device in FIG. 2;
FIG. 4 is a schematic structure diagram illustrating a positioning sleeve of the pipe connecting device in FIG. 1;
FIG. 5 is a schematic structure diagram illustrating the pipe fitting connection device in FIG. 1 matching an H-type caliper;
FIG. 6 is a schematic structure diagram illustrating the pipe fitting connection device in FIG. 1 matching a TH-type caliper;
FIG. 7 is a schematic structure diagram illustrating the pipe fitting connection device in FIG. 1 matching a VP-type caliper;
FIG. 8 is a schematic structure diagram illustrating the pipe fitting connection device in FIG.1 matching an F-type caliper;
FIG. 9 is a schematic structure diagram illustrating the pipe fitting connection device in FIG.1 matching a U-type caliper;
FIG. 10 is a schematic structure diagram illustrating the pipe fitting connection device in FIG.1 in a pressure test;
FIG. 11 is a schematic structure diagram illustrating the pipe fitting connection device in FIG.1 matching a pipe in compression.

The description of reference signs:
100, pipe fitting body; 110, core body; 111, mounting groove; 112, locking structure; 120, connecting body; 121, first matching portion; 122, first guiding portion; 200, retaining ring body; 210, third matching portion; 220, fourth matching portion; 230, flange; 300, positioning sleeve; 310, positioning rib; 311, peephole; 320, clamping groove; 321, positioning portion; 330, second matching portion; 340, second guiding portion; 400, mounting cavity; 500, sealing ring; 600, pipe; 700, caliper; 710, caliper tooth; 1111, packing groove; 1112, anti-slip wall.

### DETAILED DESCRIPTION

In order to make the objectives, technical solutions and advantages of the present disclosure clearer, the present disclosure is detailed through specific embodiments with reference to accompanying drawings. It should be appreciated that the specific embodiments described herein are merely used for illustration of the present disclosure, rather than limiting the scope of protection of the present disclosure.

It should be noted that when an element is referred to as "sleeving" or being "disposed on" another element, it may be directly provided on another element or an intermediate element may be present. When an element is referred to as "fixing" another element, it can be detachably fixed or non-detachable fixed. When an element is referred to as being "connected" to another element, it may be directly connected to another element or an intermediate element may be present. The terms "vertical", "horizontal", "left", "right" and the similar expressions used herein, are for illustrative purposes only and do not mean the only embodiments.

All technical and scientific terms used herein have the same meaning as commonly understood by one of ordinary skill in the art to which this disclosure belongs, unless otherwise defined. The terms used in the description of the present disclosure is for the purpose of describing specific embodiments and is not intended to limit the disclosure. The term "and/or" used herein includes any and all combinations of one or more of the associated listed items.

The terms "first", "second", "third" and the like in the present disclosure do not represent a specific quantity and order, but are only used for distinguishing names.

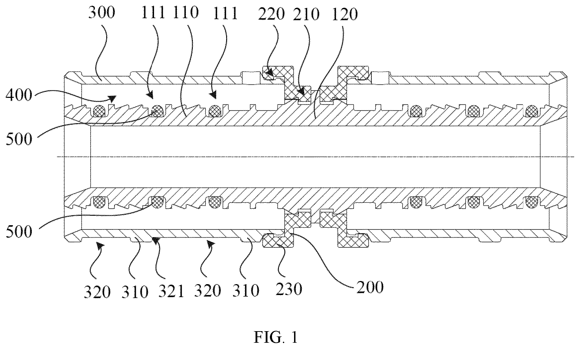

As shown in FIG. 1, FIG. 2 and FIG. 4, a pipe fitting connection device according to an embodiment of the present disclosure includes: a pipe fitting body 100 including a core body 110 and a connecting body 120 connected to each other, the connecting body 120 is provided with a first matching portion 121; a positioning sleeve 300 sleeving the core body 100, and one end of the positioning sleeve 300 is provided with a second matching portion 330 matching the first matching portion 121, to make the positioning sleeve 300 spaced from the core body 110 to form a mounting cavity 400 for mounting the pipe 600; an outer wall of the positioning sleeve 300 is provided with at least two spaced positioning ribs 310, and two adjacent positioning ribs 310 match the positioning sleeve 300 to form a clamping groove 320 matching the caliper tooth 710.

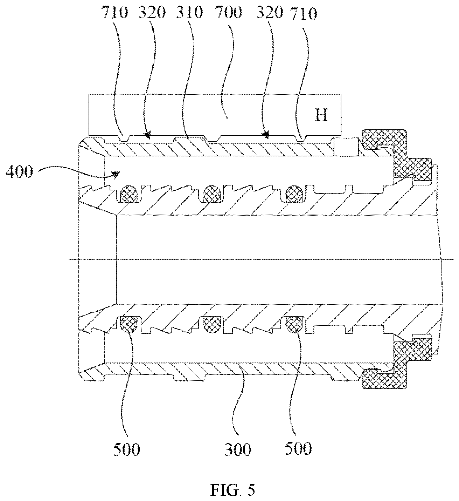

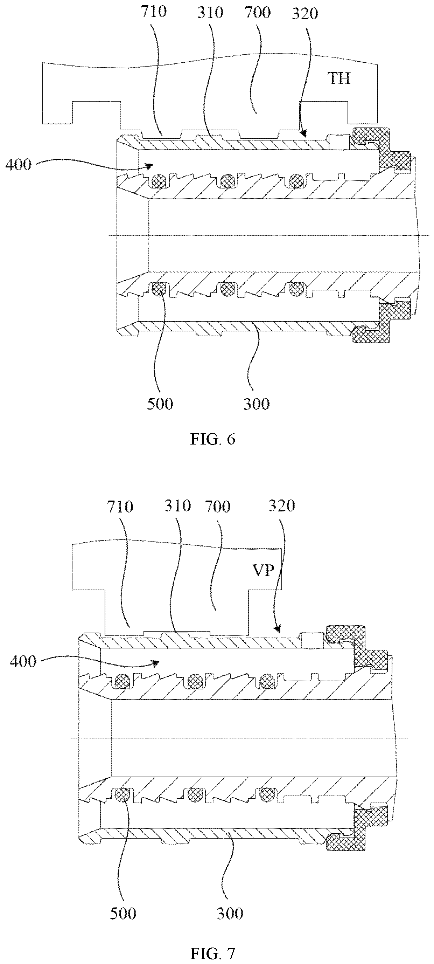

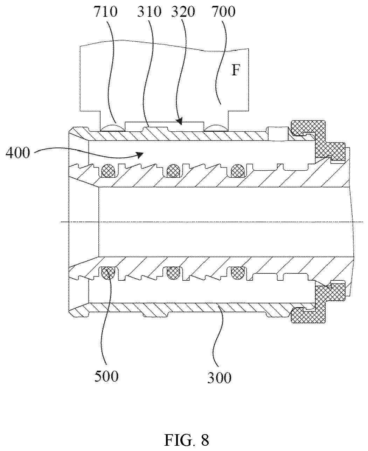

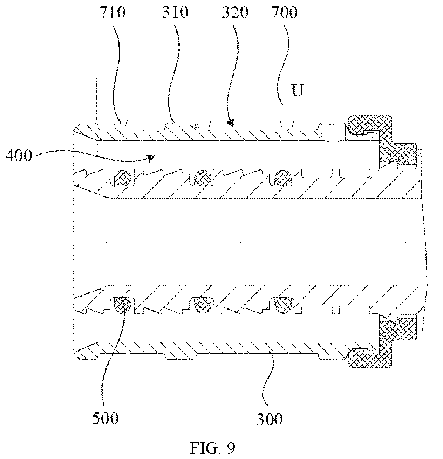

As shown in FIGS.5 to 9, when the pipe fitting connection device in the above-mentioned embodiment is mounted and used, the positioning sleeve 300 sleeves the core body 100 along a length direction of the pipe fitting body 100 until the second matching portion 330 matches the first matching portion 121, thereby implementing the mounting and fixing of the positioning sleeve 300 relative to the pipe fitting body 100. there is a gap 300 between the positioning sleeve 300 and the core body 100, and the gap forms the mounting cavity 400 for mounting the pipe 600. The pipe 600 is inserted into the mounting cavity 400 until the pipe 600 abuts against a bottom wall of the mounting cavity 400, then a caliper 700 is utilized to clamp the positioning sleeve 300 to compress and deform the positioning sleeve 300 and the pipe 600, thereby implementing the sealing. In the case where a height of the caliper tooth 710 of the caliper 700 is lower, such as an H-type caliper and a VP-type caliper, etc., the caliper tooth 710 is placed into the clamping groove 320, the positioning ribs 310 abut against an inner wall of the caliper 700. When the caliper 700 bites, a bite force of the caliper tooth 710 causes a bottom wall of the clamping groove 320 to be compressed, meanwhile, a bite force of the inner wall of the caliper 700 also causes the positioning ribs 310 to be compressed, thereby making the pipe 600 deformed and compressed in many places and ensuring the reliability of the sealing between the pipe fitting connection device and the pipe 600. In the case where a height of the caliper tooth is higher, such as a TH-type caliper, an F-type caliper, a U-type caliper, etc., the caliper tooth is placed into the clamping groove 320, there is a gap between the positioning ribs 310 and an inner wall of the caliper 700. When the caliper 700 bites, a bite force of the caliper tooth 710 causes a bottom wall of the clamping groove 320 to be compressed, meanwhile, the gap between the positioning ribs 310 and the inner wall of the caliper 700 is eliminated due to the bite of the caliper 700. When the caliper 700 further bites, the bite force of the inner wall of the caliper 700 also causes the positioning ribs 310 to be compressed, which also makes the pipe 700 deformed and compressed in many places, thereby ensuring the reliability of the sealing. Moreover, an amount of the compression of the bottom wall of the clamping groove 320 is further increased after the further bite of the caliper 700, thereby enhancing the sealing performance.

It should be noted that the match between the first matching portion 121 and the second matching portion 330 can be implemented through the match between a bump and a groove, or through the match between hooks, as long as the match between the first matching portion 121 and the second matching portion 330 enables the positioning sleeve 300 to be mounted and fixed. When there are two positioning ribs 310, the two positioning ribs 310 are spaced from and opposite to each other. When the caliper 700 is utilized to compress, the caliper tooth 710 is placed into the clamping groove 320. After the caliper 700 is clamped, at least three indentations are formed in the clamping groove 320 and at the two positioning ribs 310, thereby enhancing the sealing performance. When there are three positioning ribs 310, two adjacent positioning ribs 310 are spaced from and opposite to each other. When the caliper 700 is utilized to compress, the caliper tooth 710 is placed into the clamping groove 320. After the caliper 700 is clamped, at least four indentations are formed in the clamping groove 320 and at the three positioning ribs 310, thereby further enhancing the sealing performance.

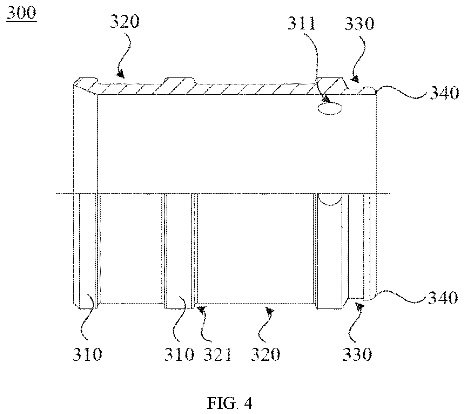

As shown in FIG. 1 and FIG. 4, on a basis of the above embodiment, the inner wall of the clamping groove 320 is provided with a positioning portion 321 for positioning the caliper tooth 710. By means of providing the positioning portion 321 on the inner wall of the clamping groove 320, such that the caliper tooth 710 of the caliper 700 can be quickly positioned and match the positioning sleeve 300, in order to prepare positioning for the subsequent bite. The positioning portion 321 may be a groove provided on a bottom wall of the clamping groove 320 and capable of matching the caliper tooth 710, or may be an inclined surface provided on a side wall of the clamping groove 320 and capable of matching the side wall of the caliper tooth 710, as long as the positioning portion 321 can fast and conveniently make the caliper tooth 710 positioned.

As shown in FIG. 1 and FIGS. 5 to 11, on a basis of any of the above embodiments, the pipe fitting connection device further includes a retaining ring sleeving the connecting body 120; the retaining ring is configured to fix the positioning sleeve 300 relative to the core body 110; and the positioning sleeve 300, the retaining ring and the core body 110 are matched to form the mounting cavity 400. When the pipe fitting connection device is assembled and used, the retaining ring sleeves the connecting body 120 along the length direction of the pipe fitting body 100 until the retaining ring is on the connecting body 120. The mounting and fixing of the positioning sleeve 300 relative to pipe fitting body 100 are implemented by using the match between the retaining ring and the positioning sleeve 300. The positioning sleeve 300, the retaining ring and the core body 110 are matched to form the mounting cavity 400 for the pipe 600 to insert, and the pipe 600 is inserted until it abuts against the retaining ring.

Furthermore, the retaining ring includes a retaining ring body 200, the retaining ring body 200 is provided with a through hole, an inner wall of the through hole is provided with a third matching portion 210 facing the connecting body 120, and the third matching portion 210 matches the first matching portion 121. When the retaining ring body 200 is mounted, the core body 110 and the connecting body 120 respectively pass through the through hole, until the third matching portion 210 matches the first matching portion 121 on the connecting body 120, thereby implementing the mounting and fixing of the retaining ring body 200. The match between the third matching portion 210 and the first matching portion 121 can be implemented by the match between a bump and a groove or by the match between hooks, as long as the match between the third matching portion 210 and the first matching portion 121 enables the retaining ring body 200 to be mounted and fixed.

Furthermore, the retaining ring body 200 is further provided with a flange 230, the flange 230 is opposite to and spaced from the third matching portion 210, the flange 230 extends in a direction opposite to a direction in which the pipe 600 is inserted, the flange 230 is provided with a first protruding portion facing the connecting body 120; and the first protruding portion, the flange 230 and the retaining ring body 200 are match to form a fourth matching portion 220 snap-fitted with the second matching portion 330. When the positioning sleeve 300 is mounted, the positioning sleeve 300 sleeves the core body 110 until the second matching portion 330 matches the fourth matching portion 220, thereby implementing the mounting and fixing of the positioning sleeve 300. The match between the second matching portion 330 and the fourth matching portion 220 can be implemented by the match between a bump and a groove, or by the match between hooks, as long as the match between the second matching portion 330 and the fourth matching portion 220 enables the positioning sleeve 300 to be mounted and fixed.

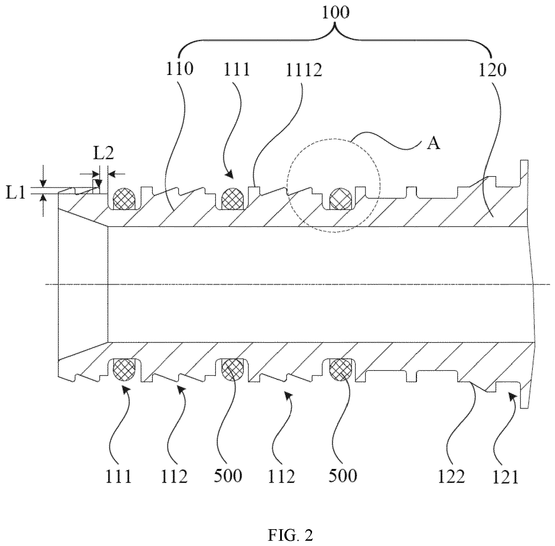

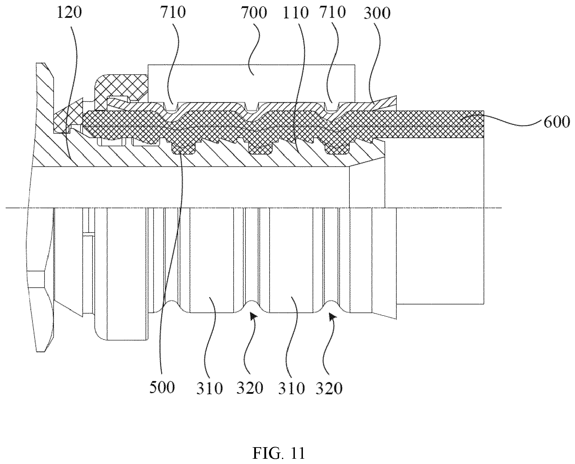

As shown in FIG. 2 and FIG. 11, on a basis of any of the above embodiments, an inner wall of the mounting cavity 400 is provided with a locking structure 112, the locking structure 112 is disposed on an outer wall of the core body 110 and/or an inner wall of the positioning sleeve 300, and the locking structure 112 is tightly snap-fitted with the pipe 600 when the pipe 600 is compressed. When the positioning sleeve 300 is compressed and deformed under the action of the caliper 700, the pipe 600 is also compressed and deformed accordingly. At the moment, the locking structure 112 is tightly snap-fitted with the outer wall of the pipe 600, to prevent the pipe 600 from loosening with respect to the inner wall of the mounting cavity 400 and falling off. Meanwhile, the locking structure 112 can be provided as the caliper tooth 710 inclined with respect to the core body 110, the deformed pipe 600 fills a gap between the adjacent caliper teeth 710 to lock the pipe 600, thereby avoiding a gap formed by thermal expansion and contraction, and ensuring the sealing performance. In the present embodiment, the caliper tooth 710 is a triangular helical tooth. In other embodiments, the caliper tooth 710 may be a trapezoidal helical tooth or the like. The locking structure 112 may be disposed on the outer wall of the core body 110 or an inner wall of the positioning sleeve 300, respectively, or may be simultaneously disposed on both the outer wall of the core body 110 and the inner wall of the positioning sleeve 300 to enhance the sealing effect.

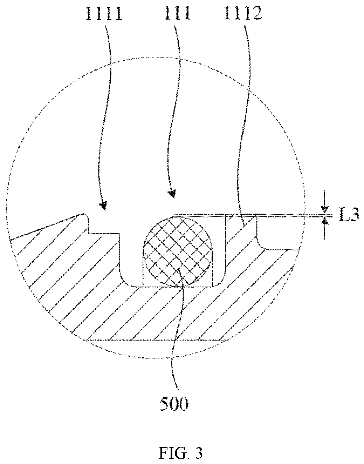

As shown in FIGS. 1 to 3, alternatively, the outer wall of the core body 110 is provided with a mounting groove 111 for mounting a sealing ring 500. The mounting groove 111 includes a first side wall away from the connecting body 120, and the first side wall is provided with a packing groove 1111. When the pipe fitting connection device is assembled and used, firstly, the sealing ring 500 is placed into the mounting groove 111 on the core body 110. In order to ensure the sealing performance, a plurality of mounting grooves 111 may be provided at intervals along a length direction of the core body 110, and then the retaining ring passes through the core body 110 to the connecting body 120, such that the match between the third matching portion 210 on the retaining ring and the first matching portion 121 on the connecting body 120 is implemented, to make the retaining ring sleeve the connecting body 120, and then the positioning sleeve 300 sleeves the core body 110 until the second matching portion 330 at an end portion of the positioning sleeve 300 is snap-fitted with the fourth matching portion 220 on the retaining ring. After the second matching portion 330 matches the fourth matching portion 220, the positioning sleeve 300 is space from the core body 110. The positioning sleeve 300, the core body 110, and the retaining ring are matched to form the mounting cavity 400. The first side wall of the mounting groove 111 is provided with a packing groove 1111. A portion of the pipe 600 corresponding to the packing groove 1111 can sink into the packing groove 1111 when the pipe 600 is compressed and deformed, and then can further contact the sealing ring 500, such that the sealing ring 500 is further compressed and deformed to completely fill the mounting groove 111, thereby preventing the displacement of the sealing ring 500 because the sealing ring 500 does not completely fill the mounting groove 111 in the subsequent use process, and avoiding a gap caused by the displacement of sealing ring 500. In an embodiment, the depth L1 of the packing groove 1111 ranges from 0.5mm to 0.7mm, and the width L2 of the packing groove 1111 ranges from 0.5mm to 1mm. At this time, the sealing ring 500 can be compressed to completely fill the mounting groove 111.

It should be noted that the sealing ring 500 can be an element capable of sealing, such as an O-ring. The sealing ring 500 can be made of an elastic material, so that the sealing ring 500 can be deformed after compression to fill the mounting groove 111, thereby enhancing the sealing performance.

As shown in FIG. 2, FIG. 3 and FIG.10, furthermore, the mounting groove 111 further includes a second side wall adjacent to the connecting body 120. The second side wall is provided with an anti-slip wall 1112, a radial height of the anti-slip wall 1112 is greater than a radial height of the sealing ring 500. Since the radial height of the anti-slip wall 1112 is greater than the radial height of the sealing ring 500, the side wall of the pipe 600 abuts against the anti-slip wall 1112 when the pipe 600 is inserted into the mounting cavity 400, such that there is a gap between the side wall of the pipe 600 and the sealing ring 500 in order to avoid a situation where the pipe 600 contacts the sealing ring 500 to make the sealing ring 500 arched and displaced during the insertion of the pipe 600. Meanwhile, there is a gap between the pipe 600 and the sealing ring 500 after the pipe 600 is inserted into the mounting cavity 400, and if the pipe fitting connection device is not bit by the caliper 700, the liquid L overflows from the gap during the subsequent pressure test, therefore, it can be determined that the pipe fitting connection device is not crimped and bit by the caliper 700. In an embodiment, a radial height difference L3 ranges from 0.1mm to 0.3mm. At this time, it can not only indicate whether the clamping is performed, but also ensure that a reliable sealing can be implemented after the subsequent compression.

As shown in FIG. 2, on a basis of any of the above embodiments, the connecting body 120 is further provided with a first guiding portion 122, and the first guiding portion 122 is disposed adjacent to the first matching portion 121. The arrangement of the first guiding portion 122 enables the retaining ring to be smoothly moved until the third matching portion 210 matches the first matching portion 121. In an embodiment, the first guiding portion 122 is a guiding inclined surface, and the guiding inclined surface is inclined toward the first matching portion 121, that is, one end of the guiding inclined surface adjacent to the first matching portion 121 is higher than one end of the guiding inclined surface away from the first matching portion 121. When the retaining ring sleeves the connecting body 120, the inner wall of the through hole first abuts against the guiding inclined surface, when an external force toward the connecting body 120 is continuously applied, the inner wall of the cavity moves along the guiding inclined surface until the second matching portion 330 matches the first matching portion 121, and the guiding inclined surface can also effectively prevent the retaining ring from falling off.

As shown in FIG. 4, on a basis of any of the above embodiments, the positioning sleeve 300 is further provided with a second guiding portion 340, and the second guiding portion 340 is disposed adjacent to a second snap-fitting portion. The arrangement of the second guiding portion 340 enables the second matching portion 330 on the positioning sleeve 300 to smoothly match the fourth matching portion 220 on the retaining ring. In an embodiment, the second guiding portion 340 is a circular arc-shaped transition end portion. During the movement of the positioning sleeve 300 toward the retaining ring until the positioning sleeve 300 contacts the retaining ring, the circular arc-shaped transition end portion can be smoothly embedded into the retaining ring, such that the end portion of the positioning sleeve 330 is constricted, to make the second matching portion 330 match the fourth matching portion 220, thereby implementing the mounting and fixing of the positioning sleeve 300.

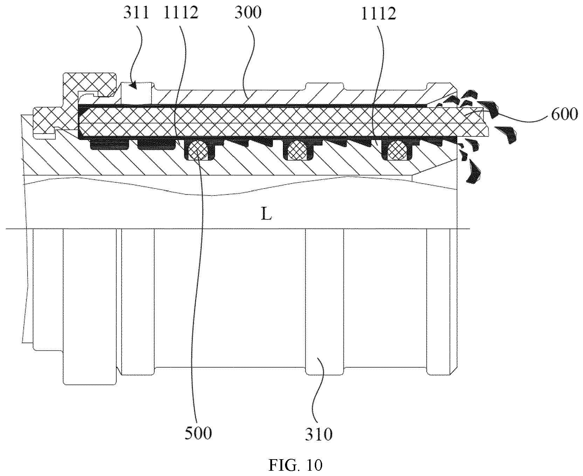

As shown in FIG. 4 and FIG. 10, on a basis of any of the above embodiments, the positioning rib 310 is provided with a peephole 311 communicated with the mounting cavity 400. The peephole 311 can be utilized to determine the depth of the pipe 600 inserted into the mounting cavity 400. Only when the depth of the pipe 600 inserted into the mounting cavity 400 satisfies a preset condition, the sealing performance can be effectively guaranteed after compression. The peephole 311 can be disposed on a positioning rib 310 adjacent to the retaining ring, and then it can be determined whether the pipe 600 is inserted to abut against the retaining ring.

The above embodiments are merely several exemplary embodiments of the present disclosure, and the description thereof is more specific and detailed, but they should not be construed as limiting the scope of the disclosure. It should be noted that for those skilled in the art, several variations and improvements can be made without departing from the the scope of protection of the present invention, which is defined by the appended claims.

## Claims

1. A pipe fitting connection device, comprising:
a pipe fitting body (110) comprising a core body (110) and a connecting body (120) connected to each other, the connecting body (120) provided with a first matching portion (121);
a positioning sleeve (300) sleeving the core body (110), one end of the positioning sleeve (300) provided with a second matching portion (330) matching the first matching portion (121), the positioning sleeve (300) spaced from the core body (110) to form a mounting cavity (400) for mounting a pipe (600), an outer wall of the positioning sleeve (300) provided with at least two spaced positioning ribs (310), and two adjacent positioning ribs (310) matching the positioning sleeve (300) to form a clamping groove (320) that matches a caliper tooth (710);
a sealing ring (500);
wherein the outer wall of the core body (110) is provided with a mounting groove (111) for mounting the sealing ring (500), the mounting groove (111) comprises a first side wall away from the connecting body (120), and the first side wall is provided with a packing groove (1111);
**characterized in that** the mounting groove (111) further comprises a second side wall adjacent to the connecting body (120), the second side wall is provided with an anti-slip wall (1112), a radial height of the anti-slip wall (1112) is greater than a radial height of the sealing ring (500).

2. The pipe fitting connection device according to claim 1, **characterized in that**, an inner wall of the clamping groove (320) is provided with a positioning portion (321) for positioning the caliper tooth (710).

3. The pipe fitting connection device according to claim 1, **characterized by** further comprising a retaining ring sleeving the connecting body (120), the retaining ring configured to fix the positioning sleeve (300) relative to the core body (110), and the positioning sleeve (300), the retaining ring and the core body (110) matched to form the mounting cavity (400).

4. The pipe fitting connection device according to claim 3, **characterized in that**, the retaining ring comprises a retaining ring body (200) provided with a through hole, an inner wall of the through hole is provided with a third matching portion (210) facing the connecting body (120), and the third matching portion (210) matches the first matching portion (121).

5. The pipe fitting connection device according to claim 4, **characterized in that**, the retaining ring body (200) is provided with a flange (230), the flange (230) is opposite to and spaced from the third matching portion (210), the flange (230) extends in a direction opposite to a direction in which the pipe (600) is inserted, the flange (230) is provided with a first protruding portion facing the connecting body (120), the first protruding portion, the flange (230) and the retaining ring body (200) are matched to form a fourth matching portion (220) snap-fitted with the second matching portion (330).

6. The pipe fitting connection device according to claim 1, **characterized in that**, an inner wall of the mounting cavity (400) is provided with a locking structure (112), the locking structure (112) is disposed on an outer wall of the core body (110) and/or an inner wall of the positioning sleeve (300), and the locking structure (112) is tightly snap-fitted with the pipe (600) when the pipe (600) is compressed.

7. The pipe fitting connection device according to claim 1, **characterized in that**, the connecting body (120) is further provided with a first guiding portion (122), and the first guiding portion (122) is disposed adjacent to the first matching portion (121).

8. The pipe fitting connection device according to claim 1, **characterized in that**, the positioning sleeve (300) is further provided with a second guiding portion (340), and the second guiding portion (340) is disposed adjacent to the second matching portion (330).

## Patentansprüche

1. Rohrformstückverbindungsvorrichtung, umfassend:
einen Rohrformstückkörper (110) umfassend einen Kernkörper (110) und einen Verbindungskörper (120), die miteinander verbunden sind, wobei der Verbindungskörper (120) mit einem ersten Anpassungsabschnitt (121) versehen ist;
eine Positionierhülse (300), die den Kernkörper (110) umhüllt, wobei ein Ende der Positionierhülse (300) mit einem zweiten Anpassungsabschnitt (330) versehen ist, der zum ersten Anpassungsabschnitt (121) passt, die Positionierhülse (300) vom Kernkörper (110) beabstandet ist, um einen Montagehohlraum (400) für die Montage eines Rohres (600) zu bilden, eine Außenwand der Positionierhülse (300) mit zumindest zwei beabstandeten Positionierrippen (310) versehen ist, und zwei angrenzende Positionierrippen (310) zu der Positionierhülse (300) passen, um eine Klemmnut (320) zu bilden, die zu einem Messschieberzahn (710) passt;
einen Dichtungsring (500);
worin die Außenwand des Kernkörpers (110) mit einer Montagenut (111) für die Montage des Dichtungsringes (500) versehen ist, die Montagenut (111) eine erste Seitenwand weg vom Verbindungskörper (120) umfasst, und die erste Seitenwand mit einer Dichtungsnut (1111) versehen ist;
**dadurch gekennzeichnet, dass** die Montagenut (111) ferner eine zweite Seitenwand umfasst, die an den Verbindungskörper (120) angrenzend ist, die zweite Seitenwand mit einer Gleitschutzwand (1112) versehen ist, eine radiale Höhe der Gleitschutzwand (1112) größer ist als eine radiale Höhe des Dichtungsringes (500).

2. Rohrformstückverbindungsvorrichtung nach Anspruch 1, **dadurch gekennzeichnet, dass** eine Innenwand der Klemmnut (320) mit einem Positionierabschnitt (321) für das Positionieren des Messschieberzahns (710) versehen ist.

3. Rohrformstückverbindungsvorrichtung nach Anspruch 1, **dadurch gekennzeichnet, dass** sie ferner einen Sicherungsring umfasst, der den Verbindungskörper (120) umhüllt, der Sicherungsring dafür ausgelegt ist, die Positionierhülse (300) relativ zum Kernkörper (110) festzustellen, und die Positionierhülse (300), der Sicherungsring und der Kernkörper (110) zueinander passen, um den Montagehohlraum (400) zu bilden.

4. Rohrformstückverbindungsvorrichtung nach Anspruch 3, **dadurch gekennzeichnet, dass** der Sicherungsring einen Sicherungsringkörper (200) umfasst, der mit einem Durchgangsloch versehen ist, eine Innenwand des Durchgangsloches mit einem dritten Anpassungsabschnitt (210) versehen ist, der dem Verbindungskörper (120) zugewandt ist, und der dritte Anpassungsabschnitt (210) zum ersten Anpassungsabschnitt (121) passt.

5. Rohrformstückverbindungsvorrichtung nach Anspruch 4, **dadurch gekennzeichnet, dass** der Sicherungsringkörper (200) mit einem Flansch (230) versehen ist, der Flansch (230) dem dritten Anpassungsabschnitt (210) gegenüberliegt und davon beabstandet ist, der Flansch (230) sich in einer Richtung erstreckt, die einer Richtung entgegengesetzt ist, in der das Rohr (600) eingefügt ist, der Flansch (230) mit einem ersten vorspringenden Abschnitt versehen ist, der dem Verbindungskörper (120) zugewandt ist, der erste vorspringende Abschnitt, der Flansch (230) und der Sicherungsringkörper (200) zueinander passen, um einen vierten Anpassungsabschnitt (220) zu bilden, der in dem zweiten Anpassungsabschnitt (330) einrastet.

6. Rohrformstückverbindungsvorrichtung nach Anspruch 1, **dadurch gekennzeichnet, dass** eine Innenwand des Montagehohlraums (400) mit einer Verriegelungsstruktur (112) versehen ist, die Verriegelungsstruktur (112) an einer Außenwand des Kernkörpers (110) und/oder einer Innenwand der Positionierhülse (300) angeordnet ist, und die Verriegelungsstruktur (112) in dem Rohr (600) fest einrastet, wenn das Rohr (600) zusammengedrückt ist.

7. Rohrformstückverbindungsvorrichtung nach Anspruch 1, **dadurch gekennzeichnet, dass** der Verbindungskörper (120) ferner mit einem ersten Führungsabschnitt (122) versehen ist, und der erste Führungsabschnitt (122) an den ersten Anpassungsabschnitt (121) angrenzend angeordnet ist.

8. Rohrformstückverbindungsvorrichtung nach Anspruch 1, **dadurch gekennzeichnet, dass** die Positionierhülse (300) ferner mit einem zweiten Führungsabschnitt (340) versehen ist, und der zweite Führungsabschnitt (340) an den zweiten Anpassungsabschnitt (330) angrenzend angeordnet ist.

## Revendications

1. Dispositif de connexion de raccord de tuyau, comprenant :
un corps de raccord de tuyau (110) comprenant un corps de noyau (110) et un corps de liaison (120) reliés l'un à l'autre, le corps de liaison (120) étant pourvu d'une première partie correspondante (121) ;
un manchon de positionnement (300) qui emmanche le corps de noyau (110), une extrémité du manchon de positionnement (300) pourvue d'une seconde partie correspondante (330) correspondant à la première partie correspondante (121), le manchon de positionnement (300) étant espacé du corps de noyau (110) pour former une cavité de montage (400) pour le montage d'un tuyau (600), une paroi extérieure du manchon de positionnement (300) pourvue d'au moins deux nervures de positionnement espacées (310), et deux nervures de positionnement adjacentes (310) correspondant au manchon de positionnement (300) pour former une rainure de serrage (320) qui correspond à une dent d'étrier (710) ;
une bague d'étanchéité (500) ;
dans lequel la paroi extérieure du corps de noyau (110) est pourvue d'une rainure de montage (111) pour monter la bague d'étanchéité (500), la rainure de montage (111) comprend une première paroi latérale éloignée du corps de liaison (120), et la première paroi latérale est pourvue d'une rainure de garniture (1111) ;
**caractérisé en ce que** la rainure de montage (111) comprend en outre une seconde paroi latérale adjacente au corps de liaison (120), la seconde paroi latérale est pourvue d'une paroi antidérapante (1112), une hauteur radiale de la paroi antidérapante (1112) est supérieure à une hauteur radiale de la bague d'étanchéité (500).

2. Dispositif de connexion de raccord de tuyau selon la revendication 1, **caractérisé en ce qu'**une paroi intérieure de la rainure de serrage (320) est pourvue d'une partie de positionnement (321) afin de positionner la dent d'étrier (710).

3. Dispositif de connexion de raccord de tuyau selon la revendication 1, **caractérisé en ce qu'**il comprend en outre une bague de retenue qui emmanche le corps de liaison (120), la bague de retenue étant configurée pour fixer le manchon de positionnement (300) par rapport au corps de noyau (110), et le manchon de positionnement (300), la bague de retenue et le corps de noyau (110) correspondant pour former la cavité de montage (400).

4. Dispositif de connexion de raccord de tuyau selon la revendication 3, **caractérisé en ce que** la bague de retenue comprend un corps de bague de retenue (200) pourvu d'un trou passant, une paroi intérieure du trou passant est pourvue d'une troisième partie correspondante (210) faisant face au corps de liaison (120), et la troisième partie correspondante (210) correspond à la première partie correspondante (121).

5. Dispositif de connexion de raccord de tuyau selon la revendication 4, **caractérisé en ce que** le corps de bague de retenue (200) est pourvu d'une bride (230), la bride (230) est opposée à et espacée de la troisième partie correspondante (210), la bride (230) s'étend dans une direction opposée à une direction dans laquelle le tuyau (600) est inséré, la bride (230) est pourvue d'une première partie en saillie faisant face au corps de liaison (120), la première partie en saillie, la bride (230) et le corps de bague de retenue (200) correspondent pour former une quatrième partie correspondante (220) ajustée par encliquetage avec la seconde partie correspondante (330).

6. Dispositif de connexion de raccord de tuyau selon la revendication 1, **caractérisé en ce qu'**une paroi intérieure de la cavité de montage (400) est pourvue d'une structure de verrouillage (112), la structure de verrouillage (112) est disposée sur une paroi extérieure du corps de noyau (110) et/ou une paroi intérieure du manchon de positionnement (300), et la structure de verrouillage (112) est ajustée par encliquetage de manière serrée avec le tuyau (600) lorsque le tuyau (600) est comprimé.

7. Dispositif de connexion de raccord de tuyau selon la revendication 1, **caractérisé en ce que** le corps de liaison (120) est en outre pourvu d'une première partie de guidage (122), et la première partie de guidage (122) est disposée adjacente à la première partie correspondante (121).

8. Dispositif de connexion de raccord de tuyau selon la revendication 1, **caractérisé en ce que** le manchon de positionnement (300) est en outre pourvu d'une seconde partie de guidage (340), et la seconde partie de guidage (340) est disposée adjacente à la seconde partie correspondante (330).
